# EUROPEAN PATENT APPLICATION

(11) **EP 0 805 129 A2**
(43) Date of publication of application: **05.11.1997**
(21) Application number: 97302469.8
(22) Date of filing: 10.04.1997
(51) Int. Cl.: C04B 40/00

(54) **Method and apparatus for producing increased strength concrete**

(30) Priority: 10.04.1996 CN 96231614
(71) Applicant: Zhiwei, Hou, Futian District (CN); Stephen Hui Research Laboratory Limited, Hong Kong (HK)
(72) Inventor: Zhiwei,Hou Room 902,Machinery Building,, Futian District, Shenzhen (CN); Chang, Robert Wen Hua, 41 Fleming Road (HK); Ho, Kong Ching,, Kowloon Bay, Kowloon (HK); Fan, Chung Wong, Hoi Wan Street, Quarry Bay, (HK); Wing, Chow Tsun, No. 7 Conduit Road (HK)
(74) Representative: Sorrell, Terence Gordon

(57) **Abstract**

A process and apparatus for producing concrete which comprises mixing sand and/or gravel utilising water which has been magnetically treated. Preferably the water is passed through a passage wherein permanent magnets are arranged therearound, have a field strength of at least 2000 gausse and are arranged to have alternate magnetic polarity.

## Description

The invention relates to a process and apparatus for producing concrete. With present concrete production it is necessary to provide a vibrating member to produce the required slump of such concrete to ensure mechanical strength after setting and nevertheless such concrete may still have less than optimum mechanical strength.

It is an object of the present invention to provide concrete of improved strength.

According to the invention there is provided a process for producing concrete which comprises mixing sand and/or gravel utilising water which has been magnetically treated.

The water is preferably passed through a passage with permanent magnets arranged therearound. The permanent magnets may have a field strength of at least 2000 gausse and are arranged to have alternate magnetic polarity.

The water may have a flow rate of at least 1.0 meters/second and preferably between 1.5 to 4.5 meters/second.

The foregoing and further features of the invention may be more readity understood from the following description of some preferred embodiments, by way of example, with reference to the accompanying drawings, in which:-
Fig. 1A is a side elevational view, part in section, of a magnetic activator;
Fig. 1B is a plan view of the activator of Fig. 1A;
Figs 2 through 7A, B and C are end, side and end sectional views respectively of alternative arrangements of permanent magnets in alternative magnetic activators;
Fig. 8 is a schematic side elevational view of a water flow apparatus for use in the concrete production process;
Figs. 9A and 9B are side sectional and plan views respectively of a flow equaliser of the water flow apparatus of Fig. 8, and
Fig.10 is a graph of cement settling weight against mixing time.

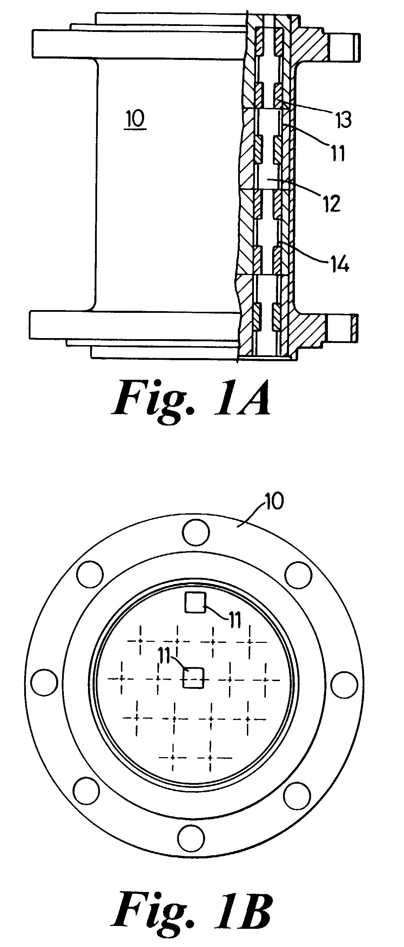

Referring now to Figs. 1A and 1B there is shown a magnetic activator comprising a cylindrical member 10 containing tubes 11 for water flow therethrough. Each tube 11 comprises a passage 12 surrounded by permanent magnets 13 spaced apart by magnetic conducting spaces 14.

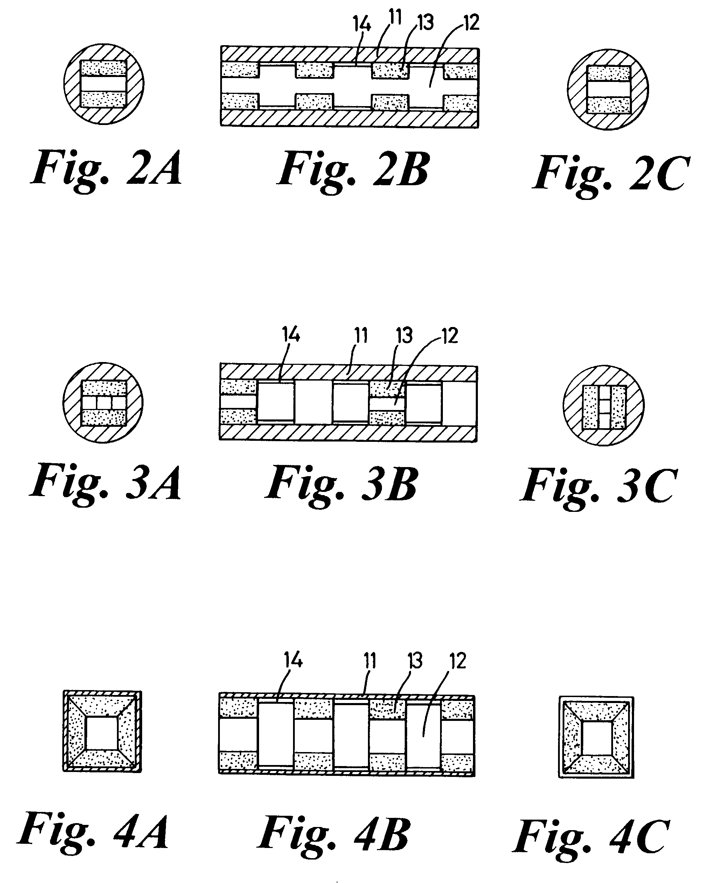

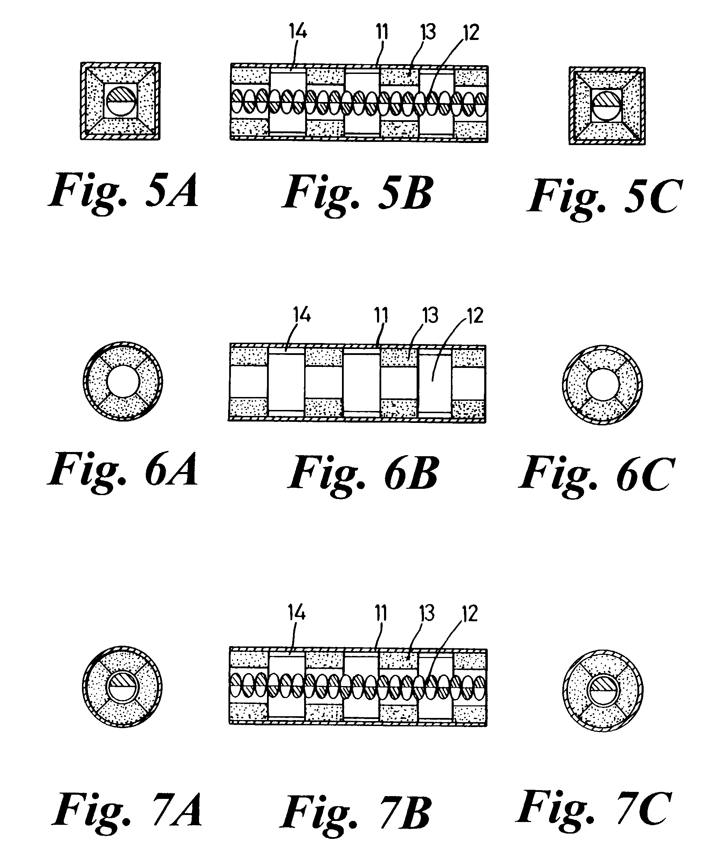

Figs. 2 through 7A, b and C show alternative arrangements of permanent magnets 12 in tubes 11.

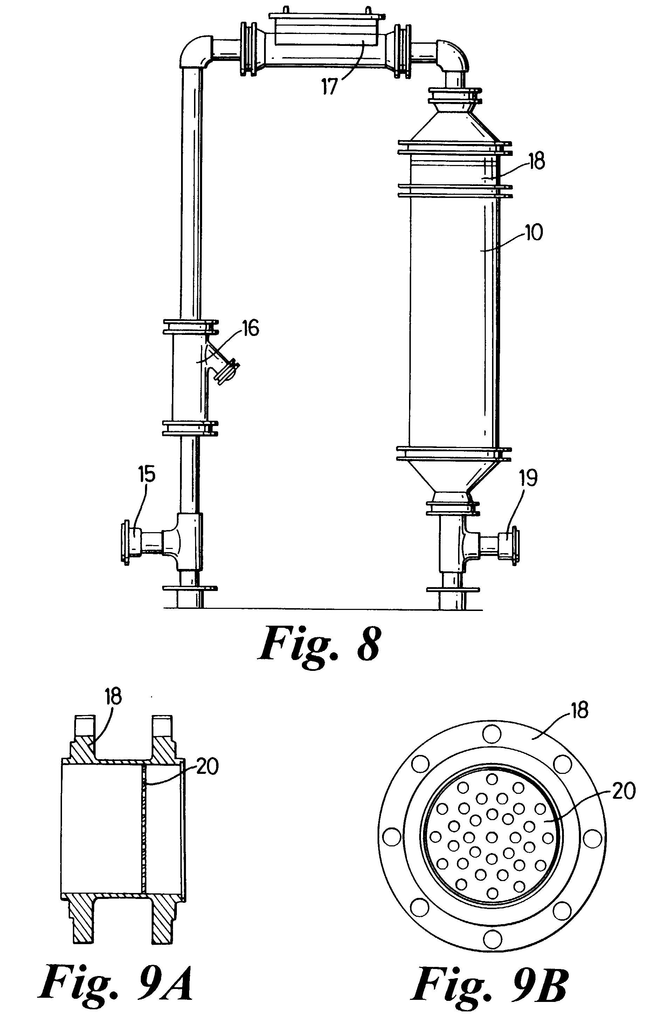

Fig.8 shows a schematic view of a water flow apparatus having an inlet 15 connected via a particulate filter 16, a magnetic filter 17, a flow equaliser 18 and a magnetic activator 10 to an outlet 19 for connection to a concrete mixing apparatus.

Figs. 9A and 9B show the flow equaliser 18 of Fig. 8 on enlarged scale and including an equalising plate 20.
minimum flow rate of 1.0 metre/second, through a minimum 150mm long magnetic path can provide sufficient magnetic action which enables ordinary water to undergo physical property changes.

Water is a highly unusual material, and its physical properties are out of line with those of similar structures. The molecular structure is not linear but V-shaped or angular-shaped with an H-O-H angle of slightly less than 105°. It is this unique structure which accounts for water's physical properties. Water interacts with itself and other substances in many ways:-
(1) hydrogen bonding (2) ionic binding (3) hydrophobic associations (4) Londen dispersion or Van der Woals forces of attraction. Water does not exist in a single molecular state but tends to clump together forming water clusters by the weak electrostatic force of hydrogen bonding molecules. The water clusters are held by hydrogen bonding which accounts for the existence of oceans. Should they be absent, water would be a gas at room temperature. Currently water is viewed as a mixture of about 10% monomer and 90% polymer of various polymeric species (G.C. Busk, Jr.) Polymer-water interaction in gelatine, food Tech. 38, V, 59-64, 1984.

When ordinary water flows vertically through the above described apparatus, the water molecules undergo nuclear magnetic resonance whereby the hydrogen and oxygen nuclear resonate with the magnetic field, causing the magnetic field lines to split off some of the hydrogen bonds in the larger water clusters forming smaller water clusters. These smaller water cluster will increase the rate of diffusion, penetration and solvation which will enhance the workability of the concrete mix in the fresh state and increase concrete compressive strength in the hardened state. The significant physical properties whcih change in magnetically activated water (MAW) are: -
(I) Diffusion rate of blue ink in MAW is faster than that of tap water;
(II) the cement settling rate in MAW is much faster and more in weight than that of tap water; and
(III) MAW diffusion or penetration through a semi-permeable membrane is faster and greater than that of tap water.

I Experiment to show liquid diffusion:
(A) Procedure : deliver the tap water in a Petri dish and the magnetically activated water (MAW) in another Petri dish. Using a glass dropper with a fine tip deliver a small drop of Parker Blue Ink near the surface of the water to each dish and observe the spreading of the blue ink.
(B) Result and interpretation : The small blue ink drop spreads or diffuses on the surface of water faster in MAW than that in tap water indicating less resistance of spreading of blue ink in the smaller water clusters in MAW.

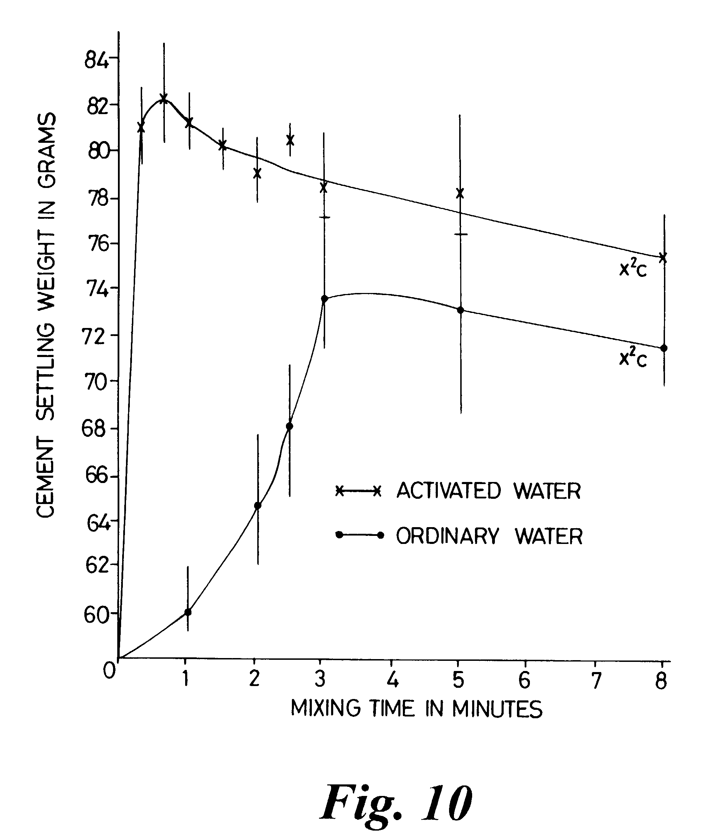

II The cement settling rate in water is a measure of:
a. the cement particulate size distribution,
b. the speed of water being absorbed and adsorbed by the cement particles and
c. the change of larger water clusters to smaller water clusters. Since smaller water clusters can penetrate and diffuse faster, the cement particles are thus slightly heavier to settle down more and faster as shown in the graph of Fig.10:

III Experiment to show diffusion and osmosis through a semi-permeable membrane;
(A) Test : Use a cork borer to bore out a few pieces of potato rods. Cut each of them to about the same length. Wipe out the surface water with tissue papers and weigh them. One rod is immersed in tap water and one is immersed in magnetically activated water. The rods are taken out each hour, dried by tissue papers and weighed again.
(B) Results and interpretation:

| | **tap water** | | **activated water** | |
|---|---|---|---|---|
| Initial weight | 5.1617 g | | 5.1038 g | |
| time, hour | (weight gain) | % gain | (weight gain) | % gain |
| after 1 hour | 0.2677 | 5.19 | 0.4191 | 8.21 |
| after 2 hours | 0.3264 | 6.32 | 0.4933 | 9.67 |
| after 3 hours | 0.3665 | 7.10 | 0.5148 | 10.08 |

Obviously the smaller water clusters in MAW penetrate or diffuse through the semi-permeable membrane (potato strips) faster.

The phenomenon that magnetically activated water produced by the above described process, produces a lot of the same polarity as the ingredients of concrete mix, and a lot more of the smaller water clusters. These can cause better dispersion of fine cement particulates. Hence, lumps of cement particulates are broken down and provide maximum surface contact area. This has two effects on fresh concrete:
(i) Broken down cement particles provide a "ball bearing" effect on the concrete mix, hence improving the workability and slump better in fresh state measurements (mm) .
(ii) Broken down cement particles have maximum contact surface area with water for maximum cement hydration process to take place and therefore the concrete compressive strength is higher in the hardened state.

Typical concrete compressive strength test results are shown in TABLE 2.

Example 1 (a) Concrete made with constant water/cement ratio. It is observed that initial slump has been improved by approximately 27% compared to ordinary water.

Example 1 (b) Concrete made with constant initial slump. It is observed for the same initial slump, the magnetically activated water concrete mix requires less water by about 2% compared to ordinary water. This results in 13% higher compressive strength compared to ordinary water.

Example 2 Concrete made with constant water/cement ratio but with higher magnetic field power at 5000 gausse. It is observed that the initial slump improved by about 25% compared to ordinary water, and slump retention is better over the 60 minutes period compared to magnetic field at 2000 gausse.

### TEST PROCEDURE FOR CEMENT SETTLING RATE

The cement settling rate in water is tested as follow: The method of testing cement settling rate is as follows: I. Weight of cement settling at a definite time:

### Method

Using a single arm balance, weigh directly the cement settling down on the suspended pan from the cement suspension in the test liquid at a definite time limit.

### Test:

### 1. Apparatus :

(a) . Single arm balance (Santer Type 414, 0.000xg)
(b) Electronic balance (Metler AJ150, 0.000xg)
(c) Magnetic stirrer (Thermolyne muova 7)

### 2. Test

(a) Using electronic balance, wieght 3.5g of cement,
(b) Pour 300ml water into a beaker,
(c) Place the 3.5g cement into the 300ml water; agitate the mixture with the magnetic stirrer for 2 minutes and immediately put the pan in the suspension; mark the time,
(d) Hang the pan on the single arm and record the weight on the pan after 2 minutes 30 seconds.

II Time of cement settling to reach definite light transmission:

### Method

Use visible light at 690mm in the spectrometer, test the time needed for the cement to settle down in the suspension from 0% to 25% light transmission.

### Test

(a) Weigh 0.5g cement
(b) Deliver 20ml water by a pipette into a special test tube and adjust the light transmission at 690mm to 100%.
(c) Take out the tube and place 0.5 cement into the water; place the tube in a spectronic 21 D; stir the mixture thoroughly and close the lid,
(d) Start the time when the light transmission reaches 0% and record the time when it reaches 25%.

The magnetically activated water is used to mix with cement powder and tested for the rate of setting either by weight or by speed in time as shown in the following table:

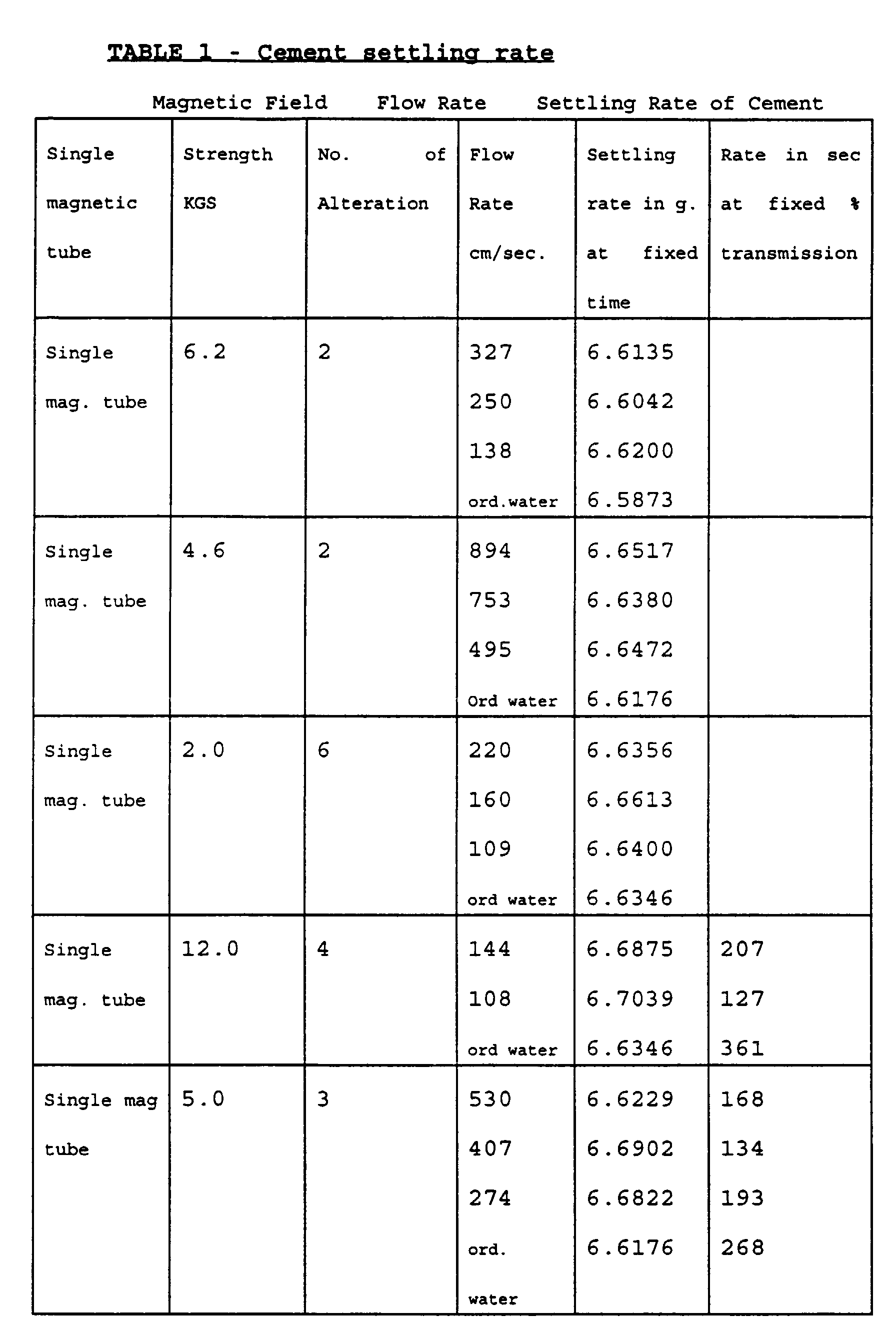

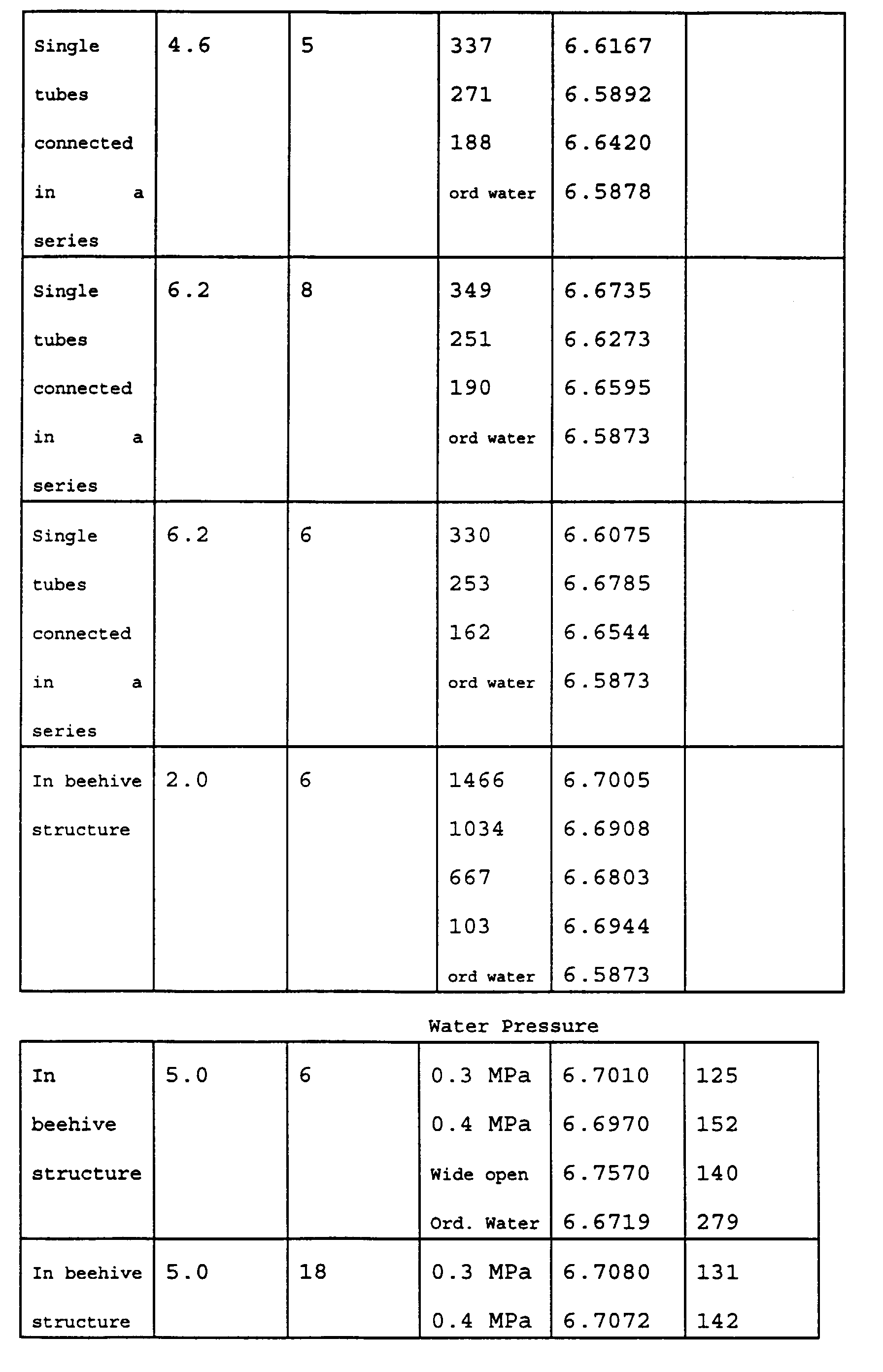

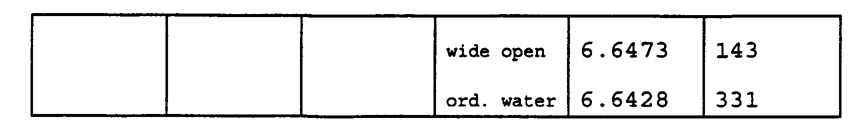

**TABLE 2-**

| concrete Strength Test Results | |
|---|---|
| Concrete mix proportion for 1 cubic metre being used for the following Examples are: | |
| ordinary Portland Cement | 400Kg |
| 10 mm aggregate (GRANITE) | 297Kg |
| 20mm aggregate (GRANITE) | 689Kg |
| Crushed Rock Fines (GRANITE) | 726Kg |

### Example I:

| | |
|---|---|
| Magnetic tube design | 2 beehive in series |
| Magnetic field power | 2000 gausses |
| No. of alternate magnetic fields | 12 |
| Water Pressure | 0.3 Mpa |

Example 1 (a) - Concrete made with constant water/cement ratio
W/C = 0.5725 water= 229kg (Applied to both ordinary and activated water).

| | Slump. (mm) | | Compressive strength (MPa) | | |
|---|---|---|---|---|---|
| **Time (min)** | **Ordinary Water** | **Activated Water** | **Age of cube 3 days** | **Ordinary Water** | **Water Activated** |
| 0 | 90 | 115 | 3 | 16.50 | 17.75 |
| 15 | 65 | 95 | 7 | 25.50 | 27.25 |
| 30 | 55 | 85 | 14 | 34.25 | 37.00 |
| 45 | 40 | 75 | 21 | 40.25 | 41.25 |
| 60 | 35 | 65 | 28 | 43.50 | 45.00 |

Example 1 (b) - Concrete made with Constant Initial Slump Concrete made from ordinary water requires = 229 kg therefore w/c=0.5725
Concrete made from magnetically activated water requires = 2524kg therefore w/c=0.5600

| **Time (min)** | **Ordinary Water** | **Activated Water** | **Age of cube 3 days** | **Ordinary Water** | **Water Activated** |
|---|---|---|---|---|---|
| 0 | 105 | 100 | 3 | 20.00 | 23.00 |
| 15 | 95 | 90 | 7 | 29.50 | 32.25 |
| 30 | 85 | 80 | 14 | 36.25 | 40.75 |
| 45 | 75 | 75 | 21 | 41.25 | 43.50 |
| 60 | 65 | 70 | 28 | 44.75 | 50.75 |

Example 2. Concrete made with constant water/cement ratio

| | |
|---|---|
| Magnetic tube design | 2 Beehive in series |
| Magnetic field power | 5000 gausse |
| No 1.0 of alternate magnetic fields | 18 |
| Water pressure | 03 MPa |

| **Time (min)** | **Ordinary Water** | **Activated Water** | **Age of cube 3 days** | **Ordinary Water** | **Water Activated** |
|---|---|---|---|---|---|
| 0 | 100 | 125 | 3 | 17.00 | 15.50 |
| 15 | 80 | 120 | 7 | 26.75 | 25.25 |
| 30 | 75 | 115 | 14 | 33.50 | 31.00 |
| 45 | 70 | 115 | 21 | 37.50 | 35.25 |
| 60 | 70 | 110 | 28 | 39.75 | 41.25 |

| **Physical Properties** | Ordinary Water | Activated Water |
|---|---|---|
| Settling Rate | 6.6233 | 6.611 |
| By weight g. | 611 | 292 |
| by light, sec | 8.69 | 9.75 |
| PH Value | 27.5 | 23.5 |
| Contact angle degree surface tension at 16 C. | 71.25 | 71.25 |

## Claims

1. A process for producing concrete which comprises mixing sand and/or gravel utilising water which has been magnetically treated.

2. A process as claimed in claim 1 wherein the water is passed through a passage wherein permanent magnets are arranged therearound.

3. A process as claimed in claim 1 or 2 wherein the permanent magnets have a field strength of at least 2000 gausse and are arranged to have alternate magnetic polarity.

4. A process as claimed in claim 3 wherein the water is passed through said passage at a minimum flow rate of 1.0 metres/second.

5. A process as claimed in claim 3 wherein the water is passed through said passage at a flow rate of between 1.5 to 4.5 meters/second.

6. An apparatus for carrying out the process as claimed in any preceding claim wherein said passage is arranged vertically.
